# DEMANDE DE BREVET EUROPEEN

(11) **EP 1 191 477 A1**
(43) Date de publication de la demande: **27.03.2002**
(21) Numéro de dépôt: 01402389.9
(22) Date de dépôt: 18.09.2001
(51) Int. Cl.: G06K 19/073

(54) **Dispositif électronique intégré sécurisé**

(30) Priorité: 20.09.2000 FR 0011970
(71) Demandeur: COMMISSARIAT A L'ENERGIE ATOMIQUE, 75752 Paris Cédex 15 (FR)
(72) Inventeur: Vacherand, Frnçois, 38800 Le Pont-de-Claix (FR); Crochon, Elisabeth, 38320 Poisat (FR)
(74) Mandataire: Ilgart, Jean-Christophe

(57) **Abrégé**

La présente invention concerne un dispositif électronique intégré sécurisé comprenant :
- une unité de traitement (10) comportant un processeur logique et une mémoire non volatile,
- une source d'énergie (11),
- au moins un capteur (12, 13, 14) apte à mesurer une grandeur physique déterminée et à fournir une valeur représentative de cette grandeur,
- des moyens (15, 16, 17) de comparaison de chaque valeur à au moins un seuil prédéfini (ref1, ref2, ref3) délivrant des signaux résultats,
- un dispositif (20) de protection de l'unité de traitement,
- un dispositif logique (21) de prise de décision apte à activer le dispositif de protection au vu des signaux résultats.

## Description

### Domaine technique

La présente invention concerne un dispositif électronique intégré sécurisé, par exemple une carte à puce.

### Etat de la technique antérieure

L'alimentation des cartes à puce de l'art connu est réalisée lors de l'introduction de celles-ci dans un lecteur. Une protection active de celles-ci ne peut avoir lieu qu'à ce moment là. Ces cartes n'ont, en effet, aucun moyen pour détecter une attaque invasive lorsqu'elles ne sont pas alimentées. Une attaque en "rétro-technique", ou "reverse engineering", permettant à une personne malhonnête de récupérer les informations confidentielles mémorisées sur cette carte, par exemple les clés de cryptage et le code d'identification personnel, a donc toutes les chances de réussir.

Pour détecter toute intrusion dommageable voire malveillante dans un circuit pour carte à puce, il est connu, comme décrit dans le document référencé [1] en fin de description, d'entourer ce circuit d'un maillage de conducteurs. Mais une telle détection ne peut se faire que si le circuit est alimenté.

L'invention a donc pour objectif de résoudre ce problème de détection pour permettre une protection des informations sensibles inscrites dans un dispositif électronique intégré sécurisé, par exemple une carte à puce ; cette protection pouvant être une destruction, un effacement de ces informations, que ce dispositif soit ou non introduit dans un lecteur.

### Exposé de l'invention

La présente invention concerne un dispositif électronique intégré sécurisé, par exemple une carte à puce, comprenant une unité de traitement comportant un processeur logique et une mémoire non volatile, caractérisé en ce qu'il comprend :
- une source d'énergie,
- au moins un capteur apte à mesurer une grandeur physique déterminée et à fournir une valeur représentative de cette grandeur,
- des moyens de comparaison de chaque valeur à au moins un seuil prédéfini délivrant des signaux résultats,
- un dispositif de protection de l'unité de traitement,
- un dispositif logique de prise de décision apte à activer le dispositif de protection au vu des signaux résultats de la comparaison.

La source d'énergie peut être intégrée au processeur. Elle peut également être un accumulateur.

Chaque capteur peut être un capteur apte à mesurer une grandeur physique caractérisant le processeur ou l'environnement du processeur, ou un capteur apte à mesurer une grandeur physique caractérisant la communication entrant ou sortant dudit dispositif

Un tel dispositif permet d'établir une veille active, c'est-à-dire de procéder à des mesures permanentes de paramètres physiques caractérisant un fonctionnement normal puis à déclencher quand cela s'avère nécessaire, la sauvegarde des informations par le dispositif de protection.

Dans un mode particulier de réalisation, le dispositif de l'invention comprend un capteur capable de détecter la rupture du circuit d'alimentation source d'énergie-processeur logique, un dispositif de transfert d'énergie sans contact depuis la source d'énergie vers le processeur et un dispositif qui permet de déclencher ce transfert. Ce capteur est apte à mesurer une grandeur physique caractérisant la liaison électrique processeur logique-source d'énergie. Le dispositif de transfert d'énergie sans contact peut comporter deux bobines placées de part et d'autre de la liaison électrique processeur logique-source d'énergie.

### Brève description des dessins

La figure 1 illustre le dispositif de l'invention.

La figure 2 illustre un mode de réalisation particulier de l'invention.

### Exposé détaillé de modes de réalisation

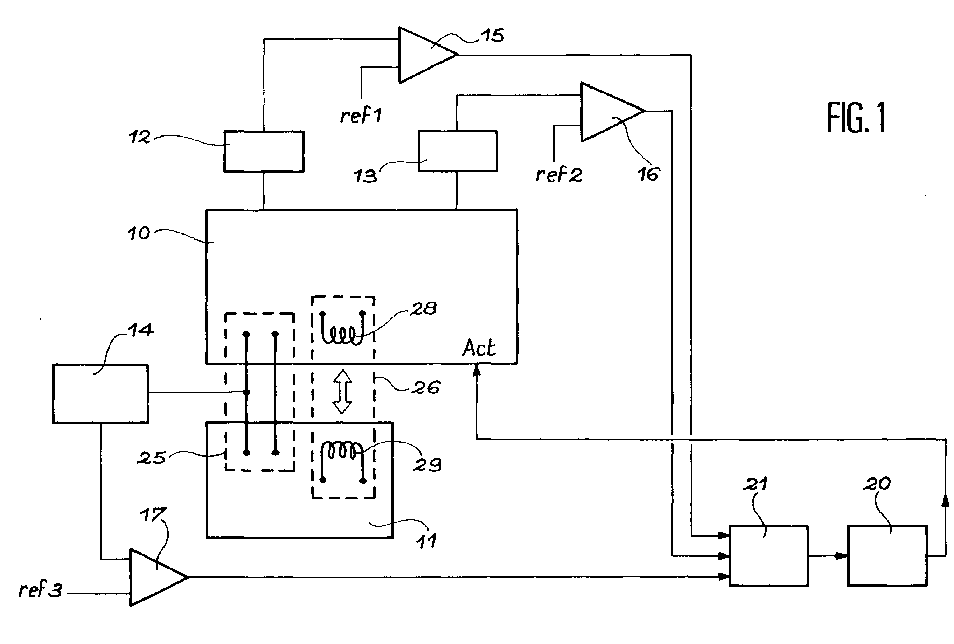

Comme illustré sur la figure 1 le dispositif de l'invention comprend :
- une source d'énergie 11,
- un circuit intégré 10, ou unité de traitement, contenant notamment un processeur logique et une mémoire non volatile,
- au moins un capteur apte à mesurer une grandeur physique déterminée et à fournir une valeur représentative de cette grandeur, ces capteurs étant ici au nombre de trois : 12, 13, 14,
- des moyens de comparaison de chaque valeur mesurée à un seuil prédéfini, réalisés ici par trois comparateurs 15, 16, 17 recevant respectivement sur une de leurs deux entrées un signal ref1, ref2, ref3, et sur l'autre entrée la sortie du capteur correspondant 12, 13 ou 14.
- un dispositif 20 de protection de l'unité de traitement 10 dont la sortie est reliée à une entrée Act (action) du dispositif,
- un dispositif logique 21 de prise de décision, apte à activer le dispositif de protection 20, recevant les signaux de sortie des comparateurs 15, 16 et 17.

Ce dispositif électronique intégré sécurisé selon l'invention met donc en oeuvre deux fonctions actives :
- une fonction de détection d'intrusion,
- une fonction de mise en oeuvre d'une sauvegarde,
de manière permanente, c'est-à-dire qu'il soit introduit ou non dans un lecteur.

On va, à présent, prendre en considération chacun de ces éléments du dispositif de l'invention.

L'unité de traitement 10 contenant un processeur et une mémoire non volatile est celle que l'on trouve de manière classique dans une carte à puce. Elle contient les fonctions suivantes :
- un processeur central (CPU),
- une mémoire à lecture seule (ROM),
- une mémoire de travail volatile (RAM),
- une mémoire de stockage non volatile (EEPROM),
- une interface de communication, avec ou sans contact, qui fournit :
   - l'alimentation du circuit (externe),
   - un canal de communication bidirectionnel,
   - éventuellement une horloge,
   - éventuellement un signal de remise à zéro du processeur.

Elle peut également contenir d'autres fonctions par exemple celles des capteurs, des comparateurs, et de la logique.

La source d'énergie 11 peut être une microbatterie : pile bouton, pile ultra-plate, pile intégrée .. Elle doit permettre l'alimentation en énergie du dispositif de l'invention pour la mise en oeuvre des deux fonctions de la détection active d'intrusion, et d'activation de la protection.

Cette source d'énergie 11 peut également être réalisée en utilisant des procédés issus de la micro-électronique, par exemple en ajoutant trois niveaux technologiques ou plus au-dessus de ceux dédiés classiquement à la réalisation du circuit intégré 10 :
ces trois niveaux permettant de fabriquer de manière collective la source d'énergie 11, la connectique et l'électrolyte à l'état solide.

La source d'énergie 11 peut également être externe au circuit intégré 10.

Les capteurs peuvent être :
- des capteurs de surveillance de l'environnement : de tels capteurs doivent vérifier si les conditions nominales d'utilisation (circuit alimenté au travers de la voie de communication) et de repos du circuit sont bien vérifiées. Un écart détecté avec une valeur référence signifie alors qu'il y a une tentative d'intrusion. Ces capteurs peuvent être notamment :
   - un capteur de température qui permet de protéger la source d'énergie 11,
   - un capteur de rayons ultra-violets qui permet de détecter une agression sur la mémoire EEPROM par exemple,
   - un capteur de rayons X qui permet de détecter une agression de type radiographie du circuit intégré 10,
   - un maillage de protection qui permet de détecter une tentative de "reverse engineering",
   - un capteur de champ électrique ou magnétique : antenne, etc..
- des capteurs de surveillance du lien de communication. De tels capteurs réalisent une surveillance électronique de ce qui se passe sur la ligne de communication. On peut citer entre autres :
   - la surveillance de la tension d'alimentation,
   - la surveillance du signal d'horloge.

Il est également possible d'avoir d'autres fonctions permettant :
- une recharge de la source d'énergie 11, si celle-ci est un accumulateur, par le lien de communication. On peut intégrer à l'intérieur du dispositif de l'invention une fonction de recharge de cet accumulateur, que la communication se fasse par contact ou sans contact.
- une activation/désactivation du dispositif de l'invention. Dans certaines applications il peut être intéressant de commander l'utilisation de la source d'énergie. Une télécommande d'arrêt/marche est alors disponible via la voie de communication.

Ainsi, sur la figure 1, le premier et le second capteur 12, 13 sont par exemple des capteurs ultra-violet et rayons X, et le troisième capteur 14 peut être un capteur permettant la mesure d'impédance de la liaison galvanique 25 entre la source 11 et l'unité de traitement 10.

Les moyens de comparaison ont pour rôle d'inspecter régulièrement les différents paramètres issus des capteurs 12, 13, 14 et de les comparer à différentes valeurs de référence ref1, ref2 et ref3.

Les comparateurs 15, 16 et 17 sont, par exemple, des amplificateurs opérationnels ; les valeurs de référence ref1, ref2 et ref3 étant soit internes soit imposées par l'extérieur ou par le microprocesseur.

Ces moyens de comparaison peuvent également réaliser :
- d'une part une détection à un niveau d'énergie faible (premier seuil) pour constituer une alarme pour intervention de maintenance. Dans le cas où la source d'énergie est une batterie rechargeable, il s'agit de détecter le niveau de charge en deçà duquel il faut émettre un signal d'avertissement de demande de recharge,
- d'autre part une détection d'un niveau d'énergie critique (deuxième seuil) pour constituer une alerte et une mise en oeuvre de la protection. L'énergie restante en deçà de ce deuxième seuil étant tout juste suffisante pour activer la protection, il s'agit de la déclencher afin de garantir la sécurité.

Le dispositif de protection 20 permet de protéger toute information confidentielle. Cette protection peut consister en :
- une remise à zéro des mémoires,
- une destruction physique des connexions vitales,
- une mise en route d'une connexion sans contact 26 entre la source d'énergie 11 et l'unité de traitement 10.

Dans le cas des circuits électroniques pour cartes à puce, il s'agit principalement d'effacer le contenu des mémoires stockant les clés de cryptage et d'identification.

Ces différents éléments peuvent constituer une zone dite protégée qui est supposée constituée par un montage réputé insécable. Les liaisons entre les différentes fonctions (puce, source d'énergie, capteurs) sont alors valides en permanence et ne peuvent pas faire l'objet d'une attaque ou d'une modification. Mais il est également possible :
- soit de détecter la déconnexion d'un capteur 12, 13 ou 14 en vérifiant que la mesure directe est erronée, ou en réalisant des moyens d'étalonnage,
- soit de pallier la déconnexion de la source d'énergie 11 en transmettant l'énergie sous d'autres façons, au moins momentanément.

### Cas particulier de la déconnexion de la source d'énergie 11

Dans ce mode de réalisation particulier, le dispositif de l'invention permet d'associer au processeur logique et à la mémoire un capteur 14 capable de détecter la rupture du circuit d'alimentation, un dispositif 26 de transfert d'énergie sans contact depuis la source d'énergie 11 vers le processeur et un dispositif qui permet de déclencher ce transfert.

Le dispositif de transfert d'énergie sans contact 26 comporte par exemple deux bobines 28 et 29 placées de part et d'autre de la liaison électrique processeur-source d'énergie, qui réalisent une liaison inductive apte à transférer de l'énergie de l'un à l'autre. Ces bobines ne sont pas obligatoirement en vis-à-vis proche, elles peuvent être à une certaine distance l'une de l'autre, et réalisent une liaison inductive.

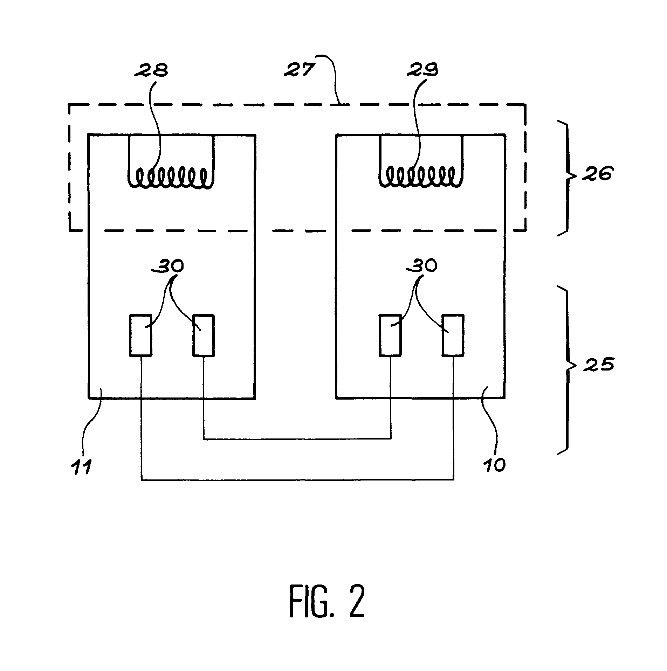

Comme illustré sur la figure 2, un barreau de matériau de type ferrite 27 peut relier les deux bobines 28 et 29 pour assurer un couplage magnétique correct. On peut toujours détecter soit une coupure de la liaison galvanique par mesure d'impédance, soit le retrait du barreau de ferrite 27 (ou une modification du couplage) par variation de l'inductance de l'une des bobines 28 ou 29.

L'alimentation du dispositif électronique 10(ou plus précisément du circuit de veille actif) se fait normalement par la liaison galvanique 25. En cas de rupture de cette liaison galvanique, le dispositif redirige instantanément le transfert d'énergie via la liaison inductive 26. Si la liaison sans contact est défectueuse, seul un signal d'alarme est transféré par la liaison galvanique 25 pour décider la protection du dispositif.

Comme illustré sur la figure 2, la liaison galvanique 25 comporte des plots 30. Elle assure les fonctions suivantes :
- alimentation (pôle + et pôle -),
- transmission bidirectionnelle d'information par courant porteur (modulation/démodulation),
- détection de présence de charge, sinon, en cas de circuit ouvert, alarme de détection d'arrachement.

Si, pour certaines applications, la transmission d'information perturbe l'alimentation, on peut envisage l'utilisation de plots supplémentaires.

On peut augmenter la protection de la liaison galvanique en entourant le dispositif d'un "anneau" de contact galvanique. Ainsi on peut détecter dans n'importe quelle direction une attaque visant à séparer la source d'énergie 11 du processeur.

La liaison inductive 26, qui comporte deux bobines 28 et 29, assure les fonctions suivantes :
- téléalimentation par porteuse à une fréquence adéquate,
- transmission bidirectionnelle d'information par modulation/démodulation de la porteuse,
- détection de présence de charge, sinon, en cas de circuit ouvert, alarme de détection d'arrachement.

La détection de la séparation du montage source d'énergie 11 - dispositif 10 est celle d'une détection de variation brutale de la charge de l'alimentation. Dès qu'une rupture de contact est détectée, le dispositif se reconfigure pour envoyer le maximum d'énergie à travers la liaison inductive 26. Ceci permet d'assurer l'alimentation du dispositif pour un instant bref mais suffisant pour exécuter la protection.

Dans ce mode de réalisation, il existe, en outre, différentes autres variantes possibles :
- lorsque la source d'énergie 11 est un accumulateur, un bloc de recharge de l'accumulateur peut puiser sa source d'alimentation soit à travers l'alimentation du circuit électronique lorsqu'il est dans un lecteur (des plots spécifiques peuvent être éventuellement ajoutés) soit par téléalimentation par couplage inductif en utilisant la bobine déjà présente.
- Une télécommande d'arrêt/marche de la source d'énergie 11 peut être disponible via la voie de communication. Celle-ci peut être assurée soit par couplage galvanique ou couplage inductif sans contact.
- un capteur de température peut vérifier si les conditions nominales d'utilisation (dispositif alimenté au travers de la voie de communication) et de repos du dispositif sont bien vérifiées. Un écart détecté signifie alors soit une tentative d'intrusion potentielle soit un changement d'environnement qui pourrait être fatal pour la source d'énergie 11,
- la mémoire de stockage peut être disposée près de la source d'énergie 11. En cas de rupture brutale de la liaison entre l'alimentation et le dispositif électronique, l'alimentation n'a alors pas de difficultés à transmettre l'énergie d'effacement des données sensibles. Les canaux de transmission permettent d'échanger les données avec le dispositif de l'invention pendant son utilisation. Le couplage inductif n'est plus obligatoire.
- La source d'énergie 11 peut utiliser la liaison inductive 26 pour transmettre un message d'alarme vers le dispositif de l'invention. Ce message, transmis sous forme de signal modulant la porteuse, est décodé par le dispositif qui réagit en conséquence.

### REFERENCES

[1] Design principles for tamper-resistant smartcard processors" de Oliver Kömmerling et Mazkus G. Kuhn (Proceedings of the USENIX Workshop on smartcard technology, Chicago, Illinois, USA, 10-11 mai 1999)

## Revendications

1. Dispositif électronique intégré sécurisé comprenant une unité de traitement (10) comportant un processeur logique et une mémoire non volatile, **caractérisé en ce qu'**il comprend :
- une source d'énergie (11),
- au moins un capteur (12, 13, 14) apte à mesurer une grandeur physique déterminée et à fournir une valeur représentative de cette grandeur,
- des moyens (15, 16, 17) de comparaison de chaque valeur à au moins un seuil prédéfini (ref1, ref2, ref3) délivrant des signaux résultats,
- un dispositif (20) de protection de l'unité de traitement,
- un dispositif logique (21) de prise de décision apte à activer le dispositif de protection au vu des signaux résultats.

2. Dispositif selon la revendication 1, dans lequel la source d'énergie (11) est intégrée au processeur.

3. Dispositif selon la revendication 1, dans lequel la source d'énergie (11) est un accumulateur.

4. Dispositif selon la revendication 1, dans lequel au moins un capteur est apte à mesurer une grandeur physique caractérisant le processeur ou l'environnement du processeur

5. Dispositif selon la revendication 1, dans lequel au moins un capteur est apte à mesurer une grandeur physique caractérisant la communication entrant ou sortant dudit dispositif.

6. Dispositif selon la revendication 1 dans lequel un capteur est apte à mesurer le niveau d'énergie de la source d'énergie afin d'émettre un signal d'avertissement de demande de recharge ou d'activation du dispositif de protection.

7. Dispositif selon la revendication 1 comprenant un capteur capable de détecter la rupture du circuit d'alimentation source d'énergie 11 - processeur logique, un dispositif (26) de transfert d'énergie sans contact depuis la source d'énergie (11) vers le processeur et un dispositif qui permet de déclencher ce transfert.

8. Dispositif selon la revendication 7, dans lequel ce capteur est apte à mesurer une grandeur physique caractérisant la liaison électrique source d'énergie (11) - processeur logique.

9. Dispositif selon la revendication 7, dans lequel le dispositif (26) de transfert d'énergie sans contact comporte deux bobines (28, 29) placées de part et d'autre de la liaison électrique source d'énergie-processeur logique.

10. Dispositif selon l'une quelconque des revendications précédentes comportant une carte à puce.
